# EUROPÄISCHE PATENTSCHRIFT

(11) **EP 1 559 289 B1**
(45) Veröffentlichungstag und Bekanntmachung des Hinweises auf die Patenterteilung: **16.09.2009**
(21) Anmeldenummer: 03810437.8
(22) Anmeldetag: 05.11.2003
(51) Int. Cl.: H04W 24/00

(54) **Verfahren und Vorrichtung zur Optimierung von zellularen drahtlosen Nachrichtennetzen**
Method and device for the optimisation of cellular wireless message networks
Procédé et dispositif pour optimiser des réseaux de communication sans fil cellulaires

(30) Priorität: 06.11.2002 DE 10251993
(43) Veröffentlichungstag der Anmeldung: 03.08.2005
(73) Patentinhaber: Vodafone Holding GmbH, 40213 Düsseldorf (DE); Actix GmbH, 01067 Dresden (DE)
(72) Erfinder: PLEHN, Juergen, 47807 Krefeld (DE); BERG, Michael, 42697 Solingen (DE); DIETERT, Jann, Erik, 40547 Düsseldorf (DE); SCHNEIDER, Peter, 41352 Korschenbroich (DE); STEINKÖNIG, Peter, 40724 Hilden (DE); DEISSNER, Jürgen, 01159 Dresden (DE); HÜBNER, Johannes, 01159 Dresden (DE); HUNOLD, Dietrich, 01129 Dresden (DE); VOIGT, Jens, 01309 Dresden (DE)
(74) Vertreter: Weisse, Renate
(86) Internationale Anmeldenummer: PCT/EP2003/012333
(87) Internationale Veröffentlichungsnummer: WO 2004/043096

(56) Entgegenhaltungen:
- EP-A- 0 505 341
- WO-A-00/11884
- WO-A-01/37446
- WO-A-02/35872
- WO-A-02/082843
- US-A- 5 561 841
- US-A- 6 044 249
- US-A- 6 128 500

## Beschreibung

### - Gegenstand der Erfindung -

Die Erfindung betrifft ein Verfahren zur Optimierung des Durchsatzes von Nachrichten in zellularen drahtlose Nachrichtennetzen entsprechend dem Oberbegriff des Anspruchs 1 und eine Vorrichtung zur Umsetzung des Verfahrens entsprechend dem Oberbegriff des nebengeordneten Anspruchs *13*.

### - Stand der Technik -

Mit der Einführung zellularer drahtloser Nachrichtennetze bestand von jeher das Problem, beim Aufbau, späteren Ausbau und Betrieb der Netze Konfigurationen zu finden, die eine möglichst optimale Ausnutzung der verfügbaren Resourcen an Hardware und Frequenzbandbreite ermöglichen. Ziel ist vor allen Dingen eine Maximierung des Durchsatzes von Nachrichten bei akzeptabler Netzqualität und ausreichender Netzverfügbarkeit bzw. Netzabdeckung. Dabei kann die konkrete Zielgröße unterschiedlich sein. So kann bspw. die Blockierungsrate minimiert werden, wie exemplarisch in der US-PS 5 826 218 dargelegt. Die WO 98/53621 wiederum basiert auf gemessenen Pilotempfangsleistungswerten. Um die Ziele der Netzoptimierung zu erreichen, werden unterschiedliche Parameter der Netzkonfiguration meist lokal begrenzt angepasst. Dabei handelt es sich z.B. um die Anpassung des Antennendiagramms bzw. der Pilotleistung wie in der US-PS 5 276 907 oder der Empfängerempfindlichkeit wie in der WO 01/37446 A1.

In Mobilfunknetzen, die in der Regel nur Informationen von festen Sendestationen zu u.U. mobilen Teilnehmern, vergleichbar wie beim herkömmlichen Rundfunk, übertragen, werden Verfahren angewandt, die die Netzkonfiguration hauptsächlich hinsichtlich der zu erzielenden Netzabdeckung basierend auf den Funkausbreitungseigenschaften in der Umgebung optimieren. Dabei kommen im Wesentlichen Funkausbreitungssimulationen und/oder Messungen der mittleren Empfangsstärke, sowie der Dienstgüte an bestimmten Orten im Netz, zum Einsatz. Die grundsätzliche Herangehensweise für derartige Verfahren ist in Norbert Geng, Werner Wiesbeck, "Planungsmethoden für die Mobilkommunikatian", Springer-Verlag Berlin, 1998, ISBN 3-540-64778-3 beschrieben.

In Nachrichtennetzen, wie z.B. der GSM-Staudard die viele Frequenzbänder verwenden, werden die Frequenzbänder den einzelnen Funkzellen des Netzes zugewiesen. Dabei spielt eine geeignete Verteilung der Frequenzbänder auf die Funkzellen zur Interferenzminimierung und damit Durchsatzmaximierung eine entscheidende Rolle. Solche Verfahren zur Frequenzplanung des Netzes werden häufig unter dem Begriff "Automatische Frequenzplanung" (AFP) zusammengefasst.

Mit der zunehmenden Bedeutung von verschiedensten mobilen Datendiensten und der Entwicklung hin zu Mobilfunknetzen der dritten Generation, z.B. nach dem UMTS-Standard, der im Rahmen des internationalen "3rd Generation Partnership Project" (3GPP) erarbeitet wird, wird eine bedarfsgerechte Netzplanung hinsichtlich des zu erwarteten dienstspezifischen Teilnehmerverkehrsaufkommens immer wichtiger. Die verschiedenen angebotenen Dienste weisen sehr unterschiedliche Eigenschaften bezüglich ihrer Bursthaftigkeit, der leitungs- oder paketvermittelten Übertragungsweise, der Datenrate, der mittleren Sendeleistung und der Symmetrie/Asymmetrie zwischen Downlink und Uplink auf. Außerdem müssen die teilweise sehr verschiedenen physikalischen Übertragungseigenschaften der einzelnen Dienste berücksichtigt werden, da für sie in der Regel unterschiedliche Transportkanäle benutzt werden.

*Die* US-Patentschrift 5,561,841 *beschreibt ein Optimierungsverfahren für ein Funknetz. Das Optimierungsverfahren nutz zur Optimierung der einstellbaren Parameter jedoch nur Daten, die aus einer Netzsimulation erzeugt wurden. Dies führt dazu, dass dieses Optimierungsverfahren recht langsam arbeitet. Zuerst müssen nämlich Daten erzeugt werden, die anschließend in das Optimierungsverfahren eingesetzt werden. Mit der Verwendung von Simulationsdaten für die Optimierung werden nur unbefriedigende Ergebnisse bei der Netzoptimierung erzielt*.

Diese speziellen Anforderungen für Mobilfunknetze der dritten Generation werden von bislang bekannten und gängigen Verfahren und Vorrichtungen zum Zwecke der Funknetzoptimierung nicht erfüllt.

### - Aufgabe der Erfindung -

Aus Sicht von Netzbetreibern erscheint es wichtig, alle angebotenen Dienste mit etwa gleichwertiger subjektiver Güte und gleicher Abdeckung zur Verfügung zu stellen. Es erscheint deshalb geboten, ein Netzoptimienmgsverfahren anzuwenden, das die vorhandenen Dienste im Nachrichtennetz überall im Versorgungsgebiet mit ausreichender Qualität bereitstellt.

Aufgabe der Erfindung ist es, schnell, kostengünstig und effizient die vorhandene Netzkonfiguration eines Nachrichtennetzes unter Berücksichtigung der heterogenen Anforderungen verschiedener Dienste zur Nachrichtenübertragung dahingehend zu optimieren, dass anschließend eine mindestens gleich gute, meist jedoch verbesserte Netzkonfiguration bezüglich Durchsatz und Netzqualität unter Beibehaltung der vorhandenen Netzabdeckung zur Verfügung steht. Jegliche Veränderung von Zellstandorten scheidet dabei als Optimierungsmaßnahme aus.

### - Lösung der Aufgabe -

*Diese Aufgabe wird mit dem eingangs genannten Verfahren mit den Merkmalen des kennzeichnenden Teils des Anspruchs 1 gelöst. Ferner wird die Aufgabe mit einer Vorrichtung der eingangs genannten Art mit den kennzeichnenden Merkmalen des Anspruch, 13 gelöst.*

Ausgestaltung des Verfahrens sind Gegenstand der Ansprüche 2 bis 12.

Ausgestaltung der Vorrichtung sind Gegenstand der Ansprüche 14 bis 18.

Die Aufgabe wird erfindungsgemäß insbesondere dadurch gelöst, dass durch einmalige oder mehrfache, dabei durchaus iterative Veränderung gewisser Einstellungen der Netzkonfiguration, insbesondere der Antennenausrichtung oder der Sendeleistung eines Referenzsignals, z.B. eines Pilotkanals, in durch das Verfahren ausgewählten Zellen, eine verbesserte Netzkonfiguration ermittelt wird, für die der funkzellflächenbezogene Teilnehmerverkehr im betrachteten Netzgebiet so weit wie möglich ausgeglichen ist. Bei ideal ausgeglichener Verkehrsverteilung zwischen den Funkzellen kann der Verkehr bei den vorgegebenen Zellstandorten optimal abgeführt werden. Das Verfahren wird durch eine grafische Darstellung der Zellflächen unterstützt, die mit Farben, die dem Verkehrsaufkommen der jeweiligen Funkzelle entsprechen, eingefärbt sind. Dadurch können Problemgebiete mit hohem Verkehrsaufkommen leicht identifiziert und die Netzkonfiguration an diesen Stellen gezielt gemäß der Erfindung angepasst werden. Eine andere Möglichkeit der grafischen Unterstützung der Identifizierung von Problemregionen hinsichtlich anderer Größen in einem Mobilfunknetz wird in der WO 00/28756 vorgeschlagen.

Das erfindungsgemäße Verfahren kann grundsätzlich für beliebige zellulare drahtlose Funknetze eingesetzt werden. Insbesondere ist es für Netze der dritten Generation geeignet, die bspw. nach dem UMTS-Standard arbeiten, und die mehrere verschiedene Dienste zur Nachrichtenübertragung den mobilen Teilnehmern anbieten. Es ist ein Vorteil des Verfahrens, dass beliebig viele angebotene Dienste im Nachrichtennetz mit unterschiedlichen Anforderungen bei der Optimierung der Netzkonfiguration berücksichtigt werden können.

Ein weiterer Vorteil des Verfahrens ist die hohe Geschwindigkeit gegenüber anderen Verfahren, mit der Ergebnisse erzielt werden können. Der Grund dafür ist, dass das Verfahren rein auf Messdaten bzw. Planungsdaten des Funknetzes oder einer Kombination von beidem beruht, die in der Regel bereits vorliegen, da sie im Planungsprozess benötigt werden. Es ist keine Simulation des Funknetzverhaltens innerhalb des iterativen Optimierungsprozesses erforderlich, wie dies z.B. in der DE 196 19 205 A1 der Fall ist. Das Verfahren lässt sich auch leicht automatisierten, was eine rechentechnische Umsetzung erlaubt. Die optionale Überprüfung nach dem erfindungsgennäßen Verfahren angepassten Netzkonfigurationen ist unabhängig vom eigentlichen Optimierungsverfahren, wodurch die Validierungsmethode frei wählbar und auch austauschbar ist. Außerdem gewinnt die Validierung durch diese Unabhängigkeit viel mehr Aussagekraft und ist andererseits auch ohne aufwändige Feldmessungen möglich. Die Genauigkeit des Verfahrens kann beliebig gesteigert werden, indem zusätzliche Daten aus der u.U. simulativen Validierung der angepassten Netzkonfiguration sowie weitere Messdaten aus dem realen Funknetz in die Beurteilung der erreichten Netzgüte einbezogen werden.

Vorteilhafte Ausgestaltungen und Varianten des Verfahrens sowie der Vorrichtung sind Gegenstand von Unteransprüchen.

### - Erläuterung -

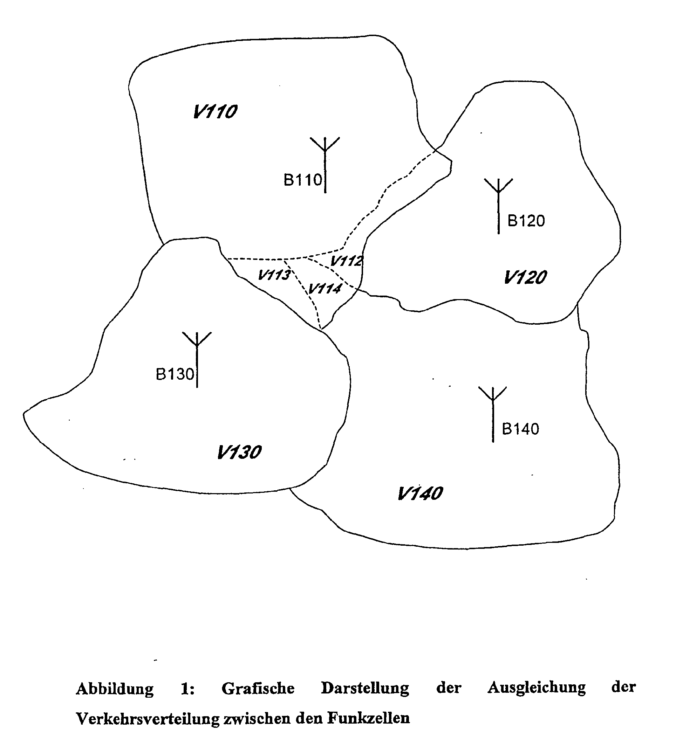

Die Erfindung betrifft ein Verfahren zur Optimierung des Durchsatzes von Nachrichten in zellulare drahtlosen Nachzichiennetzen sowie eine Vorrichtung zur Umsetzung des Verfahrens. Dabei handelt es sich insbesondere um zellulare drahtlose Nachrichtennetze mit mobilen Teilnehmern, die einen Dienst oder eine Mischung aus mehreren Diensten zur Nachrichtenübertragung einem oder mehreren Teilnehmern gleichzeitig anbieten, wie dies bspw. in Mobilfunknetzen nach dem UMTS-Standard der Fall ist. Eine Beispielkonfiguration eines solchen Nachrichtennetzes mit vier Basisstationen B110, B120, B130 und B140 ist in Abbildung 1 dargestellt.

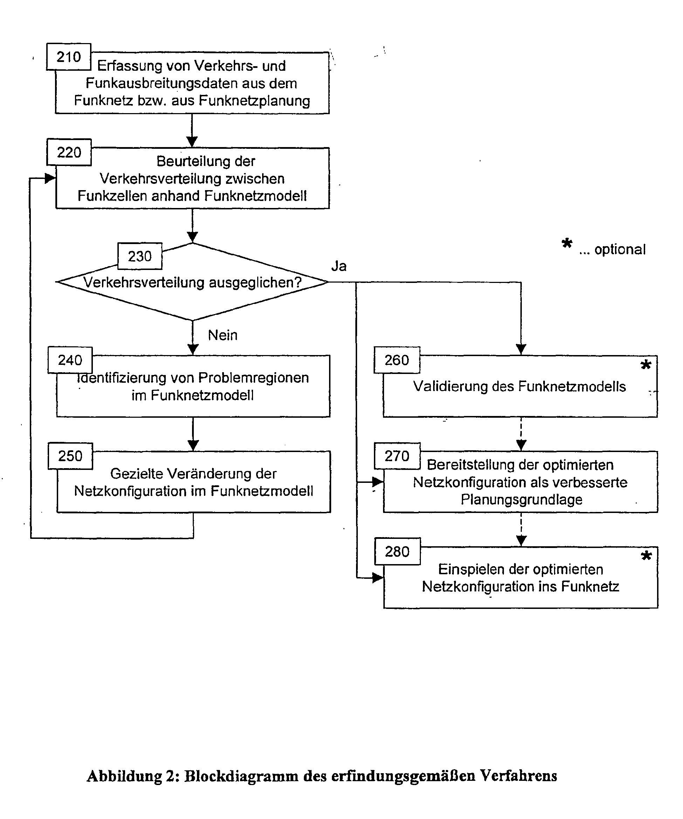

Es ist ein entscheidendes Merkmal der Erfindung, dass zur Durchfürung des Verfahrens keine umfangreichen Simulationen, Untersuchungen oder Messungen erforderlich sind. Vielmehr basiert das Verfahren auf in der Regel vorliegenden Daten, die im Netzplanungs- und -optimierungspmzess sowieso benötigt werden. Damit ist eine schnelle und an den Erfordernissen der Netzplanung orientierte Durchführung des Verfahrens garantiert. Der generelle Ablauf des Verfahrens ist im Blockdiagramm von Abbildung 2 dargestellt.

Gemäß Schritt 210 nach Abbildung 2 wird vorausgesetzt, dass als Eingabe für das Verfahren ortsbezogene Daten für das Nachrichtennetz bzw. für den zu optimierenden Netzabschnitt bezüglich des Teilnehmerverkehrs und der funktechnischen Netzabdeckung vorliegen. Dabei ist es notwendig, dass diese Daten in hinreichender flächenmäßiger Auflösung bereitstehen, damit für das Abdeckungsgebict einer beliebigen Funkzelle des Nachrichtennetzes jeweils eine größere Anzahl von Werten der genannten Größen vorhanden sind. Eine geeignete, jedoch nicht zwingende Anordnung dieser Daten ist in Form einer rechteckigen Matrix, bestehend aus vielen relativ kleinen rechteckigen Flächenstücken, denen jeweils ein Wert der genannten Größen zugeordnet ist.

Beim Teilnehmerverkehr handelt es sich um das Verkehrsaufkommen je im Nachrichtennetz angebotenen Dienst, das an verschiedenen Orten ermittelt wurde. Die Teilnehmerverkehrsdatengewinnung kann, sowohl durch Messungen, rechentechnische bzw. analytische Methoden oder Simulationen, als auch durch beliebige Kombinationen davon erfolgen.

Die als Eingabe erforderliche Netzabdeckung wird durch die zellbezogene Empfangsleistung eines mit konstanter Sendeleistung von jeder Funkzelle ausgestrahlten Referenzsignals gebildet, die an verschiedenen Orten ermittelt wurde. Das Referenzsignal kann bspw. ein Pilotkanal sein, wie er in vielen Mobilfunknetzen u.a. zur Funkzellidentifizienung für die Teilnehmerendgeräte benutzt wird. Existiert in einem Nachrichtennetz kein solches Referenzsignal, kann auch ein virtuelles Referenzsignal, das von jeder Funkzelle des Nachrichtennetzes mit gleicher Sendeleistung abgestrahlt wird, angenommen werden. Ebenso, wie beim Teilnehmerverkehr, kann die Datengewinnung der Referenzsignalempfangsleistung sowohl durch Messungen, rechentechnische bzw. analytische Methoden oder Simulationen als auch durch beliebige Kombinationen davon erfolgen. Häufig liegen für das zu optimierende Gebiet ortsbezogene Pfadvcrlustdaten der elektrischen Feldstärke von jedem Basisstationsstandort aus, bspw. in Matrizenform, vor, mit deren Hilfe unter Berücksichtigung der Sendeleistung des Referenzsignals, der angewandten Antennen und sonstiger Funkausbreitungsverluste, wie z.B. einer Körperdämpfung, die ortsbezogene Referenzsignalempfangsleistung berechnet werden kann.

An jedem Ort, wo Referenzsignalempfangsleistungsdaten vorliegen, wird in einem Modell des Nachrichtennetzes diejenige Funkzellen mit der besten Empfangsleistung ermittelt. Auf diese Weise entsteht eine Zuordnung von Flächenstücken zu Funkzellen. Alle Flächenstücke, die einer bestimmten Funkzelle zugeordnet sind, werden in ihrer Gesamtheit als Funkzellfläche (im Folgenden auch nur Funkzelle) betrachtet. Aufgrund der physikalischen Ausbreitungsbedingungen im Funkkanal, die für alle im Nachrichtennetz angebotenen Dienste gelten, sowie durch den Zellwechselalgorithmus zur Gewährleistung der Teilnehmermobilität, der in der Regel auf der an den Teilnehmerendgeräten gemessenen Empfangsleistung des Referenzsignals beruht, können die im Nachrichtennetzmodell ermittelten Funkzellflächen als gute Näherung für die tatsächlich in einem Nachrichtennetz auftretenden Funkzellen verwendet werden. Im exemplarischen Ausschnitt eines Mobilfunknetzes nach **Abbildung 1** sind die sich um die Basisstationen B110, B120, B130 und B140 herum auf die gerade beschriebene Weise einstellenden Funkzellen mit durchgezogenen Linien eingezeichnet.

Ziel des Verfahrens ist die Verbesserung des Durchsatzes von Nachrichten im Nachrichtennetz durch eine möglichst optimale Verteilung des angebotenen Teilnehmerverkehrs zwischen den Funkzellen. Es hat sich gezeigt, dass der Teilnehmerverkehr aller Dienste dann mit der besten Qualität abgeführt werden kann, wenn zwischen den Funkzellen eine möglichst ausgeglichene Verkehrsverteilung herrscht. Insofern zielt dieses Verfahren darauf ab, diese Ausgeglichenheit des Verkehrs zwischen den Funkzellen herzustellen. Um dieses Ziel zu erreichen, müssen also bestimmte Funkzellflächen gegeneinander verschoben werden, damit das ansonsten unveränderte ortsfeste Teilnehmerverkehrsaufkommen zwischen den Funkzellen abgetauscht werden kann.

Das Teilnehmerverkehrsaufkommen pro Zellfläche wird generell durch Akkumulieren der vorliegenden Verkehrswerte innerhalb der jeweiligen Funkzellen im Modell des Nachrichtennetzes bestimmt. Da bei mehreren Diensten das Verkehrsaufkommen je Dienst an einem bestimmten Ort sehr unterschiedlich sein kann, müssen die Verkehrswerte verschiedener Dienste entsprechend geeignet gewichtet aufsummiert werden. Die Wichtung richtet sich nach der durch den jeweiligen Dienst effektiv erzeugten Funkinterferenz und der Ressourcenauslastung. Deshalb fließen je nach Funksystem Parameter, wie bspw. die Systembandbreite, die Kanalbandbreite, das zu erreichende Verhältnis von Signalleistung zu Interferenzleistung, der Spreizfaktor, die mittlere bzw. maximale Datenrate, der Aktivitätsfaktor, die Codebegrenzung usw., in die Verkehrswichtung ein. In **Abbildung 1** sind die auf diese Weise aufsummierten Verkehrswerte pro Zelle mit V110, V120, V130 und V140 angegeben.

Nachdem die zellbezogenen Werte des Teilnehmerverkehrs bereitstehen, muss zunächst gemäß Schritt 220 in **Abbildung 2** eine Beurteilung der erreichten Annäherung an die angestrebte weitestgehende Ausgeglichenheit des Teilnehmerverkehrs zwischen den Funkzellen erfolgen. Dazu kann als eine mögliche Variante der Erfindung eine grafische Darstellung des untersuchten Mobilfunknetzes, ähnlich wie in **Abbildung 1****,** als Hilfestellung herangezogen werden, wobei die einzelnen Funkzellflächen jeweils mit einer dem in ihnen geführten Teilnehmerverkehr zugeordneten Farbe ausgefüllt sind Ist nach der Überprüfung in Schritt 230 nach **Abbildung 2** eine hinreichende Ausgeglichenheit des Teilnehmerverkehrs zwischen den Funkzellen bereits erreicht, kann das Verfahren abgebrochen und die gefundene Netzkonfiguration im einfachsten Fall gemäß Schritt 270 in **Abbildung 2** als verbesserte Planungsgrundlage der Netzplanung verfügbar gemacht werden. Falls dieser Zustand noch nicht erreicht wurde, dient diese Darstellung im Schritt 240 des Verfahrens nach **Abbildung 2** dem schnellen Auffinden von Problemzonen, in denen benachbarte Funkzellen sehr unterschiedlichen Verkehr führen. In einer anderen Variante der Erfindung kann die Identifizierung der Problemgebiete auch automatisiert durch ein rechentechnisches Verfahren erfolgen, bei dem Unterschiede der Teilnehmerverkehrswerte zwischen benachbarten Funkzellen untersucht werden, Dieser automatisierte Schritt ist dann in das Gesamtoptimierungsverfahren, bestehend aus den Schritten 220 bis 250 nach **Abbildung 2**, zur Minimierung der Unterschiede der Teilnehmerverkehrswerte zwischen den Funkzellen eingebettet.

Eine sich nach Schritt 250 in **Abbildung 2** anschließende lokale Verschiebung von Funkzellflächen kann durch die Veränderung gewisser Netzkonfigurationsparamcter an einzelnen Netzelementen im Modell des Nachrichtennetzes erzielt werden, insbesondere durch eine geeignete Anpassung des Antennenneigungswinkels oder der Antennenhöhe des jeweils eingesetzten Antennendiagramms oder, bspw. durch eine Anpassung der Sendeleistung des Referenzsignals, an ausgewählten Funkzellen. Da, wie oben beschrieben, all diese Parameter in die Ermittlung der Referenzsignalempfangsleistung eingehen, die ja für die Ausbildung der Funkzellflächen von entscheidender Bedeutung ist, können also auf diese Weise die Funkzellflächen verändert werden. Wurde bspw. in der Netzkonfiguration von **Abbildung 1** ein lokal begrenztes hohes Teilnehmerverkehrsaufkommen V110 in der Zelle von Basisstation B110 festgestellt, so sollte nach der Erfindung eine geeignete Anpassung von Netzparametern vorgenommen werden, die eine Verringerung dieser Zellfläche und damit eine Übernahme von Teilen des Verkehrs aus dieser Zelle in benachbarte Zellen bewirkt. Nach der Anpassung der Netzkonfiguration haben sich die durch gestrichelte Linien dargestellten Verlagerungen der Zellflächen eingestellt. Dadurch wurden vom Verkehr V110 der Zelle an der Basisstation B110 die ortsfesten Teilverkehrawerte Va112, V113 und V114 abgezogen. Diese wurden entsprechend der Abbildung auf die Zellen der Basisstationen B120, B1330 bzw. B140 aufgeteilt, die nunmehr die Verkehrswerte V120 + V112, V130 + V113 bzw. V140 + V114 aufweisen. Die erreichte Netzkonfiguration ist dann besser, wenn durch die vorgenommene Veränderung die Teilnehmerverkehrswerte der einzelnen Funkzellen ausgeglichener als vorher sind.

Zweclanäßigerweise erfolgt die Veränderung der Funkzellflächen zur Erreichung einer weitestgehenden Ausgeglichenheit des Teilnehmerverkehrs zwischen den Funkzellen iterativ, damit die ursprüngliche Netzkonfiguration schrittweise an eine optimierte Netzkonfiguration angenähert werden kann. In einem Iterationsschritt werden jeweils nur ein oder wenige Parameter der Netzkonfiguration verändert. Danach wird die Annäherung an die gewünschte Ausgeglichenheit des Teilnehmerverkehrs zwischen den Funkzellen erneut gemäß den Schritten 220/230 in **Abbildung 2** überprüft, wobei die neuen Funkzellflächen aufgrund der veränderten Netzkonfiguration zu Grunde gelegt werden. Aus dem Ergebnis der Überprüfung wird die notwendige Veränderung der Netzkonfiguration im nächsten Iterationsschritt abgeleitet. Diese Vorgehensweise kann auch mittels rechentechnischer Verfahren automatisiert werden. Die schrittweise Annäherung kann abgebrochen werden, wenn eine hinreichende Ausgeglichenheit des Teilnehmerverkehrs zwischen den Funkzellen erreicht wurde. Insbesondere ist es ein Kriterium, dass der Verkehr in den Funkzellen mit dem ursprünglich höchsten Teilaehmerverkehr deutlich im Vergleich zum mittleren Teilnehmerverkehr im Funknetzmodell reduziert wurde. Eine solche Reduktion des Verkehrsaufkommens verringert auch das lokale Interferenzniveau, wodurch sich die Netzqualität verbessern kann.

Ist eine Netzkonfiguration erreicht, die eine erheblich ausgeglichenere Verteilung des Teilnehmerverkehrs zwischen den Funkzellen als die Ursprungskonfiguration aufweist, kann als eine vorteilhafte Variante der Erfindung das Ergebnis der Netzanpassung gemäß Schritt 260 nach **Abbildung 2** validiert werden. Die Validierung kann, bspw. durch eine Netzsimulation, erfolgen. Dabei ist es zweckmäßigerweise anzustreben, jedoch nicht unbedingt erforderlich, bei dieser Simulation das Zeitverhalten des Netzes zu berücksichtigen, um die Netzqualität einschätzen zu können. Als Maß der Netzqualität können u.a. die Anzahl und die Orte von blockierten Verbindungsversuchen bzw. von abgebrochenen Verbindungen, die aufgetretene Fehlerrate und Verzögerung von Verbindungen oder der Durchsatz je Verbindung bzw. Funkzelle benutzt werden. Natürlich muss auch nach der Netzanpassung noch eine ausreichende Netzahdeckung gewährleistet sein, d.h., dass die verschiedenen Dienste an den vorbestimmten Orten verfügbar sein müssen.

Ergebnisse der Funknetzvalidierung können anschließend als weitere vorteilhafte Variante der Erfindung benutzt werden, um sie in einer erneuten Optimierung des Funknetzes zur Erhöhung der Genauigkeit des Verfahrens einzusetzen. Derartige Größen können, insbesondere der sich tatsächlich in der Netzsimulation einstellende Teilnehmerverkehr, aber auch die funktechnische Interferenz ausdrückende Größen sein. Zu letzteren zählt u.a. der so genannte "Noise Rise", der den Anteil der, lokal auf eine Funkzelle bezogen, durch andere Teilnehmer verursachten Funkinterferenz am ciesamtinterferenzaufkommen der Funkzelle im Uplink charakterisiert. Diese Größe liefert besonders für CDMA-Netze interessante Anhaltspunkte zur lokalen Netzausastung. Ebenso können Informationen zum lokalen Auftreten von Rufabweisungen, Verbindungsabbrüchen oder fehlgeschlagenen Zellwechselversuchen als Randbedingungen zur nachträglichen Optimierung des Funknetzes benutzt werden. Des Weiteren kommen auch Größen zur Beurteilung der Zellseparation, wie bspw. das Verhältnis von Sendeleistung des Referenzsignals zu Gesamtinterferenzleistung je Funkzelle, für diese Verfeinerung des erfindungsgemäßen Verfahrens in Frage.

Ebenso können in einer weiteren Variante der Erfindung solche oben angesprochenen Netzsimulationen schon vorher auf die ursprüngliche Netzkonfiguration angewendet werden, um einen Vergleich zur optimierten Neukonfiguration hinsichtlich der Netzqualität zu ermöglichen. Dadurch können auch die genannten zusätzlichen Größen, aus der Netzsimulation in das erfindungsgemäße Verfahren einfließen. Neben simulativ ermittelten Verkehrswerten als direkte Eingabegröße können insbesondere weitere Randbedingungen für das Verfahren gesetzt werden. Dies betrifft z.B. die verschiedenen Gründe und die lokalen Begrenzungen von Verbindungsabbrüchen und -abweisungen, deren Analyse interessante Aufschlüsse für eine Feinsteuerung des erfindungsgemäßen Verfahrens liefert. Als Variante hierzu können auch Messwerte weiterer GräBen aus dem realen Nachrichtennetz, insbesondere der vorgenannten Größen, in die initiale Bewertung der ursprünglichen Netzkonfiguration einfließen.

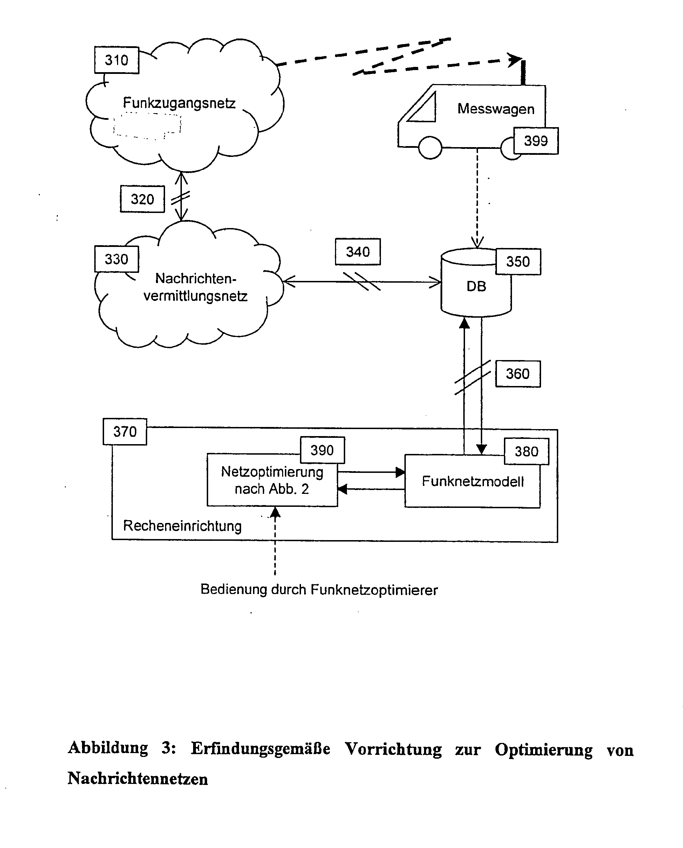

Um die durch das erfindungsgemäße Verfahren ermittelte verbesserte Netzkonfiguration im Nachrichtennetz nutzbar zu machen, ist das Verfahren in die erfindungsgemäße Vorrichtung nach **Abbildung 3** eingebettet. Zur näheren Erläuterung sei eine Unterscheidung des Nachrichtennetzes in das Funkzugangsnetz 310 und das Nachrichtenvermittlungsnetz 330 getroffen, die über eine bidirektionale Schnittstelle 320 miteinander kommunizieren können. Das Funkzugangsnetz betrifft den Teil des Nachrichtennetzes, der die direkte funktechnische Verbindung zu den mobilen Teilnehmern herstellt, d.h., es enthält im Wesentlichen die Basisstationen des Funknetzes und u.U. weitere Bestandteile, sofern diese für die direkte Kommunikation mit den Teilnehmern notwendig sind. Das Nachrichtenvermittlungsnetz bildet die Vernetzung der Basisstationen im Funkzugangsnetz mitsamt Vermittlungsstationen und Gateways zu anderen Netzen oder Dienstanbietern. Über die Schnittstelle 320 können sowohl die übertragenen Nachrichten der Teilnehmer als auch vielfältige Signalisierungs- und Steuerinformation in beiden Richtungen übermittelt werden. Für das Nachrichtennetz existiert eine Datenbank 350, in der Standortdaten, Konfigurationsdaten der einzelnen Netzelemente, Messdaten verschiedener Größen aus dem Nachrichtennetz, Zählerdaten aus den Netzelementen, Rufstalistiken, Planungsdaten etc. zusammengefasst sind. Dabei stellt das Datenbanksymbol in **Abbildung 3** zunächst nur eine logische Zusammenfassung all dieser Daten dar - je nach Implementierung bei einem Netzbetreiber kann diese Datensammlung auch in mehreren bedarfsmäßig verkoppelten Datenbanken realisiert sein. Daten aus dem Nachrichtennetz können jederzeit über die bidirektionale Schnittstelle 340 in der Datenbank abgelegt sowie neue Netzkonfigurationen darüber in das Nachrichtennetz eingespielt worden. Außerdem können optional z.B. mit einer mobilen Messeinrichtung 399 (nicht notwendigerweise motorisiert, wie in der Abbildung dargestellt) gemessene Größen und Parameter aus dem Nachrichtennetz in der Datenbank hinterlegt werden.

Zur Umsetzung des erfindungsgemäßen Verfahrens in der Vorrichtung besteht eine Recheneinrichtung 370, die eine rechentechnische Implementierung des Funkzugangsnetzes in Form eines Funknetzinodells 380 enthält. In diesem Modell spiegelt sich die anfängliche Neukonfiguration wieder, die über die bidirektionale Schnittstelle 360 aus der Datenbank geladen wurde. In der Recheneinrichtung arbeitet nun das erfindungsgemäße Verfahren 390 nach **Abbildung 2** auf der Grundlage des Funknetzmodells, um eine verbesserte Netzkonfiguration zu ermitteln. Die Veränderungen an der Netzkonfiguration werden dabei im rechentechnisch implementierten Funknetzmodell 380 vorgenommen, so dass anschließend die verbesserte Konfiguration direkt dort eingestellt ist. Bei Bedarf kann die Optimierung des Nachrichtennetzes durch einen Funknetzoptimierer gesteuert und überwacht werden. Diese Einflussnahme kann aber durch die oben beschriebene Automatisierung des Verfahrens weitestgehend begrenzt werden.

Die ermittelte verbesserte Netzkonfiguration kann nun über die Schnittstelle 360 zunächst in die Datenbank und von dort aus weiter in das Nachrichtennetz übertragen werden. Durch Messwerte aus dem Nachrichtennetz 310, 330 selbst, bzw. über eine Messeinrichtung 399, kann die erreichte Verbesserung des Durchsatzes und der Netzqualität abschließend beurteilt werden. Solche gemessenen Größen können wiederum auch in die Recheneinrichtung gespielt werden, um dort zur Validierung der verbesserten Netzkonfiguration beizutragen.

Da sich in einem Nachrichtennetz, besonders bei mehreren angebotenen Diensten, das lokale Teilnehmerverkehrsaufkommen je Dienst auch kurzzeitig, d.h. mehrfach über einen Tag hinweg, recht stark ändern kann, ist es zwecksmäßig, die Netzkonfiguration zeitnah den veränderten Bedingungen hinsichtlich des Verkehrsaufkommens anzupassen. Dies kann mit einer Variante der erfindungsgemäßen Vorrichtung erledigt werden, wobei die große Geschwindigkeit des zu Grunde liegenden Verfahrens von Vorteil ist. In dieser Variante wird der aktuelle Zustand der Netzkonfiguration und des Verkehrsaufkommens, die in der Datenbank 350 hinterlegt sind, in die Recheneinrichtung 370 überspielt und dort sogleich mit dem erfindungsgemäßen Verfahren bearbeitet. Die zeitnah ermittelte, den momentanen Netzbedingungen besser angepasste Netzkonfiguration wird daraufhin wieder zurück in die Datenbank überspielt, von wo aus sie direkt in das Nachrichtennetz übertragen und dort aktiv wird. Auf diese Weise kann verhältnismäßig schnell auf ein sich veränderndes Teilnehmerverkehrsaufkommen im Nachrichtennetz reagiert werden.

Obwohl die vorliegende Erfindung mitsamt ihren Vorteilen ausführlich dargestellt wurde, soll jedoch deutlich gemacht werden, dass verschiedene weitere Modifikationen und Variationen der Erfindung im Sinne der obigen Ausführungen realisiert werden können, ohne dass von Geist und Umfang der Erfindung, wie in den Patentansprüchen abgedeckt, abgewichen werden würde.

Das nachfolgend beschriebene Ausführungsbeispiel dient zur Veranschaulichung des erfindungsgemäßen Verfahrens zur Optimierung von Nachriehtennetzen anhand eines ausgewählten Abschnittes eines UMTS/FDD-Funknetzes, dessen generelle Merkmale bspw. in H. Holma und A. Toskala (ed.), "WCDMA for UMTS", 2nd Ed., John Wiley & Sons, Chichester, UK, 2002, ISBN 0-470-84467-1 beschrieben sind. Den Ausgangspunkt stellt ein etwa 10km² umfassendes Gebiet dar, in dem insgesamt 15 Sendestationen mit je 3 Zellen nach heute üblichen und dem Stand der Technik entsprechenden Planmgsmethoden angeordnet und konfiguriert wurden. Für jede Sendestation wird der Pfadverlust von in einer Matrix angeordneten Empfangsstandorten (Pfadverlustmatrix) mit einer räumlichen Auflösung von 10m nach dem aktuellen Stand der Technik mit Hilfe von strahlenoptischen Ausbreitungsmodellen unter Zuhilfenahme eines detaillierten 3D-Umgebungsmodells berechnet. Weiterhin wird für einen Sprachdienst (*Speech*) und einen WWW-Dienst (*WWW*) Informationen zur ortsabhängigen Verkehrsdichte in Form von Verkehrsmarrizen mit einer räumlichen Auflösung von 25m zu Grunde gelegt.

Im Ausführungsbeispiel wird die Ausgangsnetzkonfiguration mit Hilfe eines dynamischen UMTS-Systemsimulators hinsichtlich der Kapazität und Qualität der Nachrichtenübertragungen analysiert. Anschließend wird das Funknetz mit Hilfe des erfindungsgemäßen Verfahrens optimiert und die veränderte Netzkonfiguration einer erneuten dynamischen Analyse in Bezug auf erfolgte Veränderungen in Kapazität und Qualität unterzogen.

Für jede Zelle wird der sich ergebende äquivalente Verkehr anhand der zu Grunde liegenden Verkehrsmodelle und der vorliegenden ortsbezogenen Verkehrsdichteinformation berechnet. Der sich aus den Wellenausbrcitungsbedingungen und der Netzkonfiguration ergebende lokale Versorgungsbereich jeder Zelle lässt sich farblich kennzeichnen, wobei der Farbcode dem zuvor berechneten äquivalenten Verkehr in Erlang entspricht. Dabei ist nicht der absolute Wert, sondern die relative Abweichung der Werte einander angrenzender Zellen entscheidend.

Für räumlich benachbarte Zellen ist ein sehr unterschiedliches abzuführendes Verkehrsaufkommen zu erwarten. Nach der Analyse der Netzkonfiguration mit Hilfe eines dynamischen Systemsimulators hinsichtlich Kapazität und Qualität wird erfindungsgemäß durch iterative Veränderung der Antenncnausrichtungen und der Sendeleistung der Referenzsignale allein basierend auf den gegebenen ortsbezogenen Verkehrs- und Funkausbreitungsdaten eine Funknetzkonfiguration ermittelt, die ein bezüglich der Ausgangskönfigoration weitaus ausgeglicheneres zu erwartendes Verkehrsaufkommen aufweist.

Es lässt sich nachweisen, dass die mit dem erfindungsgemäßen Qptimierungsverfahren ermittelte Netzkonfiguration eine ausgeglichenere Verteilung des zu erwartenden Verkehrsaufkommens auf die Zellen aufweist. Damit sollte die zur Verfügung stehende globale Funknetzkapazität besser ausgenutzt werden können.

Es ist ersichtlich, dass mit Hilfe des erfindungsgemäßen Optimierungsverfahrens die ursprüngliche Blockierungs- und Verbindungsabbruchwahrscheinlichkeit in dem Beispiel reduziert werden kann. Es können nahezu alle Dienstanforderungen mit der optimierten Netzkonfiguration zugelassen und bedient werden. Im Ausführungsbeispiel kann eine Erhöhung der gleichzeitig vom Funknetz bedienten Verbindungen unter den beschriebenen Rahmenbedingungen von 11% demonstriert werden.

## Patentansprüche

1. Verfahren zur Optimierung von zellularen drahtlosen Nachrichtennetzen mit mobilen Teilnehmern,
a) in denen ein Dienst oder eine Mischung aus mehreren Diensten zur Nachrichtenübertragung einem Teilnehmer gleichzeitig angeboten wird, und
b) für kleinste *einer bestimmten Funkzelle zugeordnete* rechteckige Flächenstücke, *denen* ortsbezogene Werte sowohl des Teilnehmerverkehrs je angebotenem Dienst als auch der zellbezogenen Empfangsleistung eines mit konstanter Sendeleistung von jeder Funkzelle ausgestrahlten Referenzsignals *zugeordnet* sind (210),
c) *die* beiden *ortsbezogene Werte* jeweils entweder durch Messungen,
- analytische Methoden oder
- Simulationen oder auch
- beliebige Kombinationen davon gewonnen *werden, und*
d) in flächenmäßiger Auflösung in Form von eine bestimmte Region abdeckenden Matrizen dieser *ortsbezogenen Werte*, vorliegen,
e) in einem Modell des Nachrichtennetzes eine iterativ optimierte Netzkonfiguration durch Akkumulation *von vorliegenden Daten, welche von geeignet für den Ausgleich einer Verkehrsverteilung* gewichteten diensupezifischen Teilnehmerverkehrswerten der rechteckigen Flächenstücke *gebildet werden, wobei die Wichtung sich nach der durch den jeweiligen Dienst erzeugten Funkinterferenz und Ressourcenauslastung richtet,* und
f) *durch Aufnahme von Messwerten von Größen aus dem realen Nachrichtennetz, bewertet wird und diese Messwerte als zusätzliche Eingaben in die Optimierung der Verkehrsverteilung zwischen den Funkzellen des Nachrichtennetzes einfließen.*
g) lokal begrenzte Anpassung der ursprünglichen Netzkonfiguration zur Verwendung in dem realen Nachrichtennetz bereitgestellt wird (280).

2. Verfahren zur Optimierung von Nachrichtennetzen nach Anspruch 1, **dadurch gekennzeichnet, dass** Pfadverluste bei der Signalübertragung, die durch entfernungsmäßige Dämpfung der Sendeleistung hervorgerufen werden, in dem Modell des Nachrichtennetzes berücksichtigt werden.

3. Verfahren nach Anspruch 2, **dadurch gekennzeichnet, dass** die Pfadverluste bei der Wichtung der dienstspezifischen Teilnehmerverkehrswerte berücksichtigt werden.

4. Verfahren nach einem der Ansprüche 1 bis 3, **dadurch gekennzeichnet, dass** die Wichtung der einzelnen dienstspezifischen Teilnehmerverkehrswerte jeweils nach der durch den zugehörigen Dienst effektiv erzeugten Funkinterferenz und der Ressourcenauslastung pro Teilnehmer berechnet wird, wobei je nach im Nachrichtennetz verwendetem Funkstandard die Parameter Systembandbreite, Kanalbandbreite, das zu erreichende Verhältnis von Signalleistung zu Interferenzleistung, Spreizfaktor, mittlere bzw. maximale Datenrate, Aktivitätsfaktor *und* Codebegrenzung, des jeweiligen Dienstes Berücksichtigung finden.

5. Verfahren nach einem der Ansprüche 1 bis 4, **dadurch gekennzeichnet, dass** für die iterative Veränderung *von* Einstellungen der Netzkonfiguration zur Erzielung einer größtmöglichen Ausgeglichenheit der Verteilung des Teilnehmerverkehrs pro Funkzelle zwischen den einzelnen Funkzellen *ein rechnergestütztes* Optimierungsverfahren eingesetzt wird.

6. Verfahren nach einem der Ansprüche 1 bis 6, **dadurch gekennzeichnet, dass** die optimierte Netzkonfiguration durch anschließende Netzsimulation eines Funknetzmodells validiert wird.

7. Verfahren nach einem der Ansprüche 1 bis 6, **dadurch gekennzeichnet, dass** die auf die optimierte Netzkonfiguration im Funknetzmodell angewandte Netzsimulation nach einer dynamischen Netzsimulationsmethode arbeitet, *bei der* das zeitbezogene Verhalten des Nachrichtennetzes zwecks Ermittlung von aussagekräftigen Kenngrößen zur Beurteilung der Netzeigenschaften, der Netzqualität und des Netzverhaltens modelliert wird.

8. Verfahren nach einem der vorherigen Ansprüche, **dadurch gekennzeichnet, dass** die auf die optimierte Netzkonfiguration im Funknetzmodell angewandte Netzsimulation nach einer statistischen Netzsimulationsmethode, wie einer Monte-Carlo-Simulation, arbeitet, die sich **dadurch auszeichnet, dass** sie eine große Anzahl von Augenblickszuständen des Nachrichtennetzes, in der Regel ohne Betrachtung der vorher und nachher folgenden Zustände zwecks Ermittlung statistischer Kenngrößen zur Beurteilung der Netzeigenschaften modelliert.

9. Verfahren nach einem der Ansprüche 1 bis 8, **dadurch gekennzeichnet, dass** bei der Ermittlung der optimierten Netzkonfiguration vor und nach jeder Veränderung der Netzkonfiguration, *und*/*oder* zu Beginn und am Ende des Verfahren, die jeweilige Verteilung des Teilnehmerverkehrs auf die einzelnen Funkzellflächen sowie gegebenenfalls noch weitere Parameter aus Eingabedaten des Verfahrens und/oder Netzsimulationsergebnissen in einer Karte des von dem Nachrichtennetz abgedeckten Gebietes grafisch dargestellt werden, wobei die genannte Verkehrs verteilung auf die Funkzellen derart illustriert wird, dass jede Zellfläche in der grafischen Darstellung mit einer dem in ihr angebotenen Teilnehmervcrkehr eindeutig zugeordneten Farbe eingefärbt ist.

10. Verfahren nach Anspruch 9, **dadurch gekennzeichnet, dass**
a) *Identifikation derjenigen Funkzellen, die deutlich vom mittleren je Funkzelle angebotenen Teilnehmerverkehr abweichen, wobei* die grafische Darstellung des Teilnehmorveikehrs pro Funkzelle und gegebenenfalls weitere Parameter aus Eingabedaten des Verfahrens und/oder Netzsimulationsergebnissen benutzt werden,
b) eine Veränderung *von* Parametern der Netzkonfiguraion *in iterativen Folgeschritten*, gegebenenfalls unter Berücksichtigung von Randbedingungen, die durch die weiteren dargestellten Parameter definiert werden, *zur Erreichung* einer gleichmäßigeren Verteilung des Teilnehmerverkehrs zwischen den Funkzellen erreicht werden kann.

11. Verfahren nach einem der Ansprüche 1 bis 10, **dadurch gekennzeichnet, dass** in jedem Iterationsschritt aus einer Analyse der geografischen Nachbarschaftsbeziehungen der Funkzellen eine Matrix ermittelt wird, deren Spalten und Zeilen jeweils mit den Funkzellen des untersuchten Netzausschnittes bezeichnet sind und in deren Felder die Differenzen der Verkehrswerte der jeweiligen Funkzellen und gegebenenfalls weitere Randbedingungen eingetragen werden, um daraus in einem automatisierten Prozess mindestens eine Funkzelle zu ermitteln, für die darauf folgend gewisse Netzkonfigurationsparameter zwecks Verbesserung der Netzkonfiguration im Funknetzmodell verändert werden.

12. Verfahren nach einem der Ansprüche 1 bis 11, **dadurch gekennzeichnet, dass** die anfängliche Netzkonfiguration durch Netzsimulation eines Funknetzmodells bewertet wird und gewisse Größen, insbesondere der funkzellenbezogene Durchsatz, als zusätzliche Eingaben sowie andere Ergebnisse, insbesondere die Gründe und Orte von lokal auftretenden Verbindungswunschabweisungen und Verbindungsabbrüchen, als zusätzliche Randbedingungen in die Optimierung der Verkehrsverteilung zwischen den Funkzellen des Nachrichtennetzes einfließen.

13. Vorrichtung zur Optimierung von zellularen drahtlosen Nachrichtennetzen mit mobilen Teilnehmern,
a) die mit einem Funkzugangsnetz (310) zur drahtlosen Anbindung der mobilen Teilnehmer und
b) einem damit in Verbindung stehenden Nachrichtenvenrmittlungnetz (330) mit fest vernetzten Übertragungskanälen,
c) über eine Datenbank (350) mit entsprechenden bidirektionalen Schnittstellen zum Nachrichtenvermittlungsnetz (330) in Verbindung steht, wobei
d) die *Datenbank* (350) *alternativ oder in Kombination* aktuelle Standortdalen, Konfigurationen der Netzelement, Messdaten verschiedener Größen aus dem Nachrichtennetz, Zählerdaten aus den Netzelementen, Rufstatistiken, Planungsdaten enthält,
wobei,
e) Simulationsmittel vorgesehen sind, welche in einer Recheneimichtung (370) ein virtuelles Modell des Nachrichtennetzes erzeugen, wobei die Konfiguration der simulationsmittel aus der Datenbank (350) mit dem aktuellen Stand der Netzkonfiguration geladen wird und
f) der jeweilige Zustand der simulationsmittel umgekehrt in die Datenbank (350) übermittelt werden kann, und
g) die Konfiguration der simulationsmittel durch ein in der Recheneinrichtung (370) implementiertes Verfahren nach einem der vorherigen Verfahrensansprüche angepasst wird.

14. Vorrichtung nach Anspruch 13, **dadurch gekennzeichnet, dass** die fest vernetzten Ühertragungskanäle zur Nachrichtenübennittlung frei verschaltbar unterteilt ausgebildet sind.

15. Vorrichtung nach einem der Ansprüche 13 oder 14, **dadurch gekennzeichnet, dass** eine in die Datenbank (350) aus der Recheneinheit (370) übertragene, angepasste Netzkonfiguration in das Nachrichtennetz übertragen wird.

16. Vorrichtung nach einem der Ansprüche 13 bis 15, **dadurch gekennzeichnet, dass** die Datenbank (350) auch in mehrere, im Bedarfsfalle auch untereinander verkoppelte, Datenbanken nach Art der gehaltenen Daten untergliedert sein kann.

17. Vorrichtung nach einem der Ansprüche 13 bis 16, **dadurch gekennzeichnet, dass** mit einer mobilen Messeinrichtung (399) im Nachrichtennetz (310, 330) aufgezeichnete Messwerte in der Datenbank abgelegt werden können.

18. Vorrichtung nach einem der Ansprüche 13 bis 17, **dadurch gekennzeichnet, dass** die momentane Netzkonfiguration und aktuelle Verkehrsdaten aus der Datenbank (350) in die Recheneinrichtung (370) überspielt werden, um dort durch automatische Anwerndung des Optimierungsverfahrens nach Anspruch 1 eine der aktuellen Netzsituation besser angepasste Netzkonfiguration zu ermitteln und diese verbesserte Netzkonfiguration direkt anschließend zurück in die Datenbank (350) und von dort aus in das Nachrichtennetz (310, 330) einzuspielen, wo sie zeitnah zur Wirkung kommt.

## Claims

1. A method of optimising cellular wireless communication networks with mobile subscribers,
a) wherein the communication networks provide a service or a mixture of a plurality of services for message communication simultaneously to one subscriber, and
b) location-related values of both, the subscriber traffic per provided service and the cell-related received power of a reference signal transmitted with constant transmission power by each radio cell, are assigned (210) to very small rectangular area elements assigned to a certain radio cell,
c) both location-related values are obtained either by measurements,
- analytical methods or
- simulations or
- any combinations thereof, and
d) are provided in area-like resolution in form of matrices of these location-related values covering a certain region,
e) an iteratively optimised network configuration is evaluated in a model of the communication network by accumulation of provided data, which is obtained from service-specific subscriber traffic values of the rectangular area elements suitable weighted in order to balance a traffic distribution, wherein the weighting depends on the radio interference and the resource utilisation generated by the respective service, and
f) by incorporation of measured values of quantities from the real communication network, wherein the measured values are utilised as additional inputs in the optimisation of the traffic distribution between the radio cells of the communication network,
g) locally limited adjustment of the original network configuration is provided (280) for use in the real communication network.

2. A method of optimising communication networks according to claim 1, **characterised in that** path losses during signal transmission, which are caused by the distance-related damping of the transmitter power, are taken into account in the model of the communication network.

3. A method according to claim 2, **characterised in that** the path losses are taken into account when weighting the service-specific subscriber traffic values.

4. A method according to any of claims 1 to 3, **characterised in that** the weighting of the individual service-specific subscriber traffic values is calculated, in each case, depending on the radio interference effectively generated by the associated service and the resource utilisation per subscriber, whereby, depending on the radio standard used in the communication network, the parameters of system bandwidth, channel bandwidth, the ratio of signal power to interference power to be achieved, spreading factor, average or maximum data rate, activity factor and code limitation of the respective service are taken into account.

5. A method according to any of claims 1 to 4, **characterised in that** a computer-aided optimising method is used for the iteratively changing of settings of the network configuration to achieve maximal balance of the distribution of the subscriber traffic per radio cell between the individual radio cells.

6. A method according to any of claims 1 to 6, **characterised in that** the optimised network configuration is validated by subsequent network simulation of a radio network model.

7. A method according to any of claims 1 to 6, **characterised in that** the network simulation applied to the optimised network configuration in the radio network model operates in accordance with a dynamic network simulation method, which models the time-related behaviour of the communication network in order to determine meaningful characteristics for the evaluation of the network properties, network qualities and network behaviour.

8. A method according to any of the preceding claims, **characterised in that** the statistical network simulation applied to the optimised network configuration of the radio network model operates in accordance with a network simulation method such as a Monte Carlo simulation, which is distinguished **in that** it models a large number of instantaneous states of the communication network usually without considering the preceding or following states in order to determine statistical characteristics for the evaluation of the network characteristics.

9. A method according to any of claims 1 to 8, **characterised in that** during determining the optimized network configuration before and after each change of the network configuration and/or at the beginning and at the end of the method, the respective distribution of the subscriber traffic on the individual radio cell surfaces as well as, if desired, further parameters from input data of the method and/or network simulation results are graphically displayed in a map of the area covered by the communication network, wherein the said traffic distribution to the radio cells is illustrated in such a way, that, in the graphic illustration, each cell surface is coloured with a colour unambiguously associated with the provided subscriber traffic.

10. A method according to claim 9, **characterised in that**
a) an identification of those radio cells which clearly deviate from the average subscriber traffic provided per radio cell, wherein the graphic display of the subscriber traffic per radio cell and, if desired, further parameters from input data of the method and/or network simulation results are used,
b) a variation of parameters of the network configuration in iterative consecutive steps can be achieved, if necessary taking boundary conditions into account, which are defined by the further displayed parameters, for achieving a more uniform distribution of the subscriber traffic between the radio cells.

11. A method according to any of claims 1 to 10, **characterised in that**, in each iteration step, a matrix is determined from an analysis of the geographic neighbourhood relations of the radio cells, the columns and rows of this matrix being designated by the radio cells of the investigated network section and in the fields of this matrix the differences of the traffic values of the respective radio cells and, if appropriate, further boundary conditions are inscribed, in order to determine therefrom, in an automated process, at least one radio cell for which subsequently certain network configuration parameters are varied in the radio network model to improve the network configuration.

12. A method according to any of claims 1 to 11, **characterised in that** the initial network configuration is evaluated by network simulation of a radio network model, and certain quantities, in particular the cell-related throughput, as additional inputs as well as other results, in particular the reasons and locations of locally occurring denials of connection desires and connection interruptions, are entered as additional boundary conditions into the optimisation of the traffic distribution between the radio cell of the communication network.

13. A device for optimising cellular wireless communication networks with mobile subscribers,
a) which communicates with a radio access (310) network for wireless connection of the mobile subscribers and
b) a therewith connected communication switching network (330) with fixedly networked transmission channels,
c) over a database (350) with appropriate bi-directional interfaces to the communication switching network (330), wherein
d) the database (350) either alternatively or in combination contains current position data, configurations of the network elements, measuring data of various quantities from the communication network , counter data from the network elements, call statistics, planning data, wherein
e) simulation means are provided, which generate a virtual model of the communication network in a computer device (370), wherein the configuration of the simulation means is loaded from the database (350) with the current state of the network configuration, and
f) the respective state of the simulation means in turn can be transmitted to the database (350), and
g) the configuration of the simulation means is adjusted by a method according to any of the preceding claims, which is implemented in the computer device (370).

14. A device according to claim 13, **characterised in that** the fixedly networked transmission channels for message communication are subdivided to be freely interconnectable.

15. A device according to any of claims 13 or 14, **characterised in that** an adjusted network configuration transferred from the computer unit (370) to the database (350) is transferred to the communication network.

16. A device according to any of claims 13 to 15, **characterised in that** the database (350) can be sub-divided into a plurality of databases, which, if required, are coupled with each other, depending of the type of the stored data.

17. A device according to any of claims 13 to 16, **characterised in that** measured values recorded with a mobile measuring device (399) in the communication network (310, 330) can be stored in the database.

18. A device according to any of claims 13 to 17, **characterised in that** the instantaneous network configuration and current traffic data are transferred from the database (350) to the computer device (370), in order to determine, by automatic application of the optimisation method according to claim 1, a network configuration better matching the current network situation, and to return this improved network configuration directly subsequently to the database (350) and, from there, to the communication network (310, 330), where it becomes effective in real time.

## Revendications

1. Procédé pour l'optimisation de réseaux d'informations cellulaires sans fil à abonnés mobiles,
(a) dans lesquels un service ou un mélange de plusieurs services de transmission d'informations sont proposés simultanément à un abonné, et
(b) pour les plus petites parcelles rectangulaires associées à une cellule radio déterminée auxquelles sont associées (210) des valeurs, rattachées à un lieu, autant du flux d'abonnés en fonction du service proposé que de la puissance de réception, rattachée à une cellule, d'un signal de référence émis par chaque cellule radio à une puissance d'émission constante,
(c) les deux valeurs rattachées à un lieu sont obtenues à chaque fois par soit des mesures,
- méthodes analytiques ou
- simulations ou également
- des combinaisons quelconques de celles-ci, et
(d) sont disponibles dans une résolution en surface sous forme de matrices recouvrant une région précise de ces valeurs rattachées à un lieu,
(e) dans un modèle de réseau d'informations, une configuration de réseau optimisée de façon itérative est évaluée en accumulant des données disponibles qui sont formées par des valeurs de flux d'abonnés des parcelles rectangulaires spécifiques à chaque service et pondérées pour la compensation d'une répartition des flux, la pondération dépendant de l'interférence radio produite par le service respectif et l'utilisation des ressources, et
(f) en enregistrant des valeurs de mesure de grandeurs issues du réseau d'informations réel, et ces valeurs de mesure entrant sous forme d'entrées supplémentaires dans l'optimisation de la répartition des flux entre les cellules radio du réseau d'information,
(g) une adaptation limitée localement de la configuration d'origine pour l'utilisation dans le réseau d'informations réel étant mise à disposition (280).

2. Procédé d'optimisation de réseaux d'informations selon la revendication 1, **caractérisé en ce que** des path loss sont pris en compte dans le modèle de réseau d'information lors de la transmission des signaux provoquée par l'affaiblissement de la puissance d'émission dû à la distance.

3. Procédé selon la revendication 2, **caractérisé en ce que** des path loss sont pris en compte lors de la pondération des valeurs de flux d'abonnés spécifiques à chaque service.

4. Procédé selon l'une quelconque des revendications 1 à 3, **caractérisé en ce que** la pondération de chacune des valeurs de flux d'abonnés spécifique à chaque service est calculée par abonné à chaque fois d'après l'interférence radio générée effectivement par le service associé et l'utilisation des ressources, selon la norme radio utilisée dans le réseau d'informations les paramètres, la largeur de bande du système, la largeur de bande du canal, le rapport à obtenir entre la puissance des signaux par rapport à la puissance d'inférence, le facteur d'écartement, le taux de données moyen voire maximal, le facteur d'activité et la limitation du code du service respectif étant pris en compte.

5. Procédé selon l'une quelconque des revendications 1 à 4, **caractérisé en ce qu'**on utilise un procédé d'optimisation assisté par ordinateur pour la modification itérative de réglages de la configuration de réseau pour obtenir un équilibrage le meilleur possible de la répartition du flux d'abonnés par cellule radio entre chacune des cellules radio.

6. Procédé selon l'une quelconque des revendications 1 à 5, **caractérisé en ce que** la configuration de réseau optimisée est validée par une simulation de réseau d'un modèle de réseau de radiotéléphonie effectuée à la suite.

7. Procédé selon l'une quelconque des revendications 1 à 6, **caractérisé en ce que** la simulation de réseau appliquée à la configuration de réseau optimisée dans le modèle de réseau de radiotéléphonie fonctionne d'après une méthode de simulation de réseau dynamique pour laquelle le comportement dans le temps du réseau d'informations est mis sous forme de modèle en vue de déterminer des grandeurs caractéristiques expressives pour l'évaluation des propriétés, de la qualité et du comportement du réseau.

8. Procédé selon l'une quelconque des revendications précédentes, **caractérisé en ce que** la simulation de réseau appliquée à la configuration de réseau optimisée dans le modèle de réseau de radiotéléphonie fonctionne d'après une méthode de simulation statistique comme une simulation Monte Carlo qui se **caractérise en ce qu'**elle met sous forme de modèle une grand nombre d'états momentanés du réseau d'informations, en général sans considérer les états suivants et précédents en vue de déterminer des grandeurs caractéristiques statistiques afin d'évaluer les propriétés du réseau.

9. Procédé selon l'une quelconque des revendications 1 à 8, **caractérisé en ce que** lors de la détermination de la configuration de réseau optimisée avant et après chaque modification de la configuration de réseau et/ou au début et au terme du procédé, chaque répartition du flux d'abonnés sur chacune des surfaces de cellule radio ainsi qu'éventuellement d'autres paramètres sont représentés graphiquement sur une carte du territoire couvert par le réseau d'informations à partir de données d'entrée du procédé et/ou des résultats de la simulation de réseau, la répartition des flux citée sur les cellules radio étant illustrée de telle façon que chaque surface de cellule porte dans la représentation graphique une couleur associée distinctement au flux d'abonnés qui lui est proposé.

10. Procédé selon la revendication 9, **caractérisé par**
(a) l'identification des cellules radio divergeant nettement du flux d'abonnés moyen proposé par cellule radio, la représentation graphique du flux d'abonnés par cellule radio et éventuellement d'autres paramètres étant utilisée à partir des données d'entrée du procédé et/ou des résultats de la simulation de réseau,
(b) une modification de paramètres de la configuration de réseau en étapes itératives, éventuellement en prenant en compte des conditions limites définies par les autres paramètres représentés, pour obtenir une répartition plus homogène du flux d'abonnés entre les cellules radio.

11. Procédé selon l'une quelconque des revendications 1 à 10, **caractérisé en ce qu'**au cours de chaque étape d'itération une matrice est déterminée à partir d'une analyse des relations de voisinage géographique des cellules radio, matrice dont les colonnes et les lignes sont désignées à chaque fois par les cellules radio de la section de réseau examinée et dans les champs de laquelle sont inscrites les différences de valeurs de flux des chaque cellule radio et éventuellement d'autres conditions limites afin de déterminer à partir de ça au cours d'un processus automatisé au moins une cellule radio pour laquelle certains paramètres de configuration de réseau sont modifiés consécutivement en vue de l'amélioration de la configuration de réseau dans le modèle de réseau de radiotéléphonie.

12. Procédé selon l'une quelconque des revendications 1 à 11, **caractérisé en ce que** la configuration de réseau initiale est évaluée par simulation de réseau d'un modèle de réseau de radiotéléphonie et certaines grandeurs, notamment le débit rattaché à chaque cellule radio, se présentant sous forme d'entrées supplémentaires ainsi que d'autres résultats, notamment les raisons et les lieux de refus de demande de connexion et d'interruptions de connexion sous forme de conditions limites supplémentaires rentrent en ligne de compte dans l'optimisation de la répartition des flux entre les cellules radio du réseau d'information.

13. Dispositif pour l'optimisation de réseaux d'information sans fil à abonnés mobiles,
(a) qui est relié à un réseau d'accès de radiotéléphonie (310) pour la connexion sans fil des abonnés mobiles et
(b) un réseau de transmission d'informations (330) relié à celui-ci muni de canaux de transmission connectés en réseau,
(c) par l'intermédiaire d'une banque de données (350) munie des interfaces correspondantes bidirectionnelles vers le réseau de transmission d'informations (330),
(d) la banque de données (350) comprenant au choix ou en combinaison des données de lieu actuelles, des configurations des éléments de réseau, des données de mesure de différentes grandeurs issues du réseau d'informations, des données de compteur issues des éléments de réseau, des statistiques d'appels, des donnés de planification,
(e) des moyens de simulation étant prévus, moyens générant dans un dispositif de calcul (370) un modèle virtuel du réseau d'informations, la configuration des moyens de simulation étant chargée à partir de la banque de données (350) avec l'état actuel de la configuration de réseau et
(f) chaque état des moyens de simulation pouvant être transmis inversement dans la banque de données (350),
(g) la configuration des moyens de simulation étant adaptée par un procédé implanté dans le dispositif de calcul d'après l'une quelconque des revendications de procédé précédentes.

14. Dispositif selon la revendication 13, **caractérisé en ce que** les canaux de transmission pour la transmission des informations connectés en réseau sont subdivisés en canaux à commutation libre.

15. Dispositif selon l'une quelconque des revendications 13 ou 14, **caractérisé en ce qu'**une configuration de réseau adaptée transmise à la banque de données (350) à partir de l'unité de calcul (370) est transmis au réseau d'informations.

16. Dispositif selon l'une quelconque des revendications 13 à 15, **caractérisé en ce que** la banque données (350) peut être subdivisée également en plusieurs banques de données, reliées si nécessaire ensemble, selon la nature des données obtenues.

17. Dispositif selon l'une quelconque des revendications 13 à 16, **caractérisé en ce que** des valeurs de mesure enregistrées dans le réseau d'informations (310, 330) à l'aide d'un dispositif de mesure mobile (399) peuvent être déposées dans la banque de données.

18. Dispositif selon l'une quelconque des revendications 13 à 17, **caractérisé en ce que** la configuration de réseau momentanée et des données de flux actuelles à partir de la banque de données (350) sont recouvertes dans le dispositif de calcul (370) afin de déterminer à cet endroit-là par application automatique du procédé d'optimisation selon la revendication 1 une configuration de réseau mieux adaptée à la situation actuelle du réseau et de rentrer, tout de suite après, cette configuration de réseau améliorée dans la banque de données (350) et de là dans le réseau d'informations (310, 330), là où elle est en train d'agir.
